# EUROPEAN PATENT APPLICATION

(11) **EP 4 683 187 A1**
(43) Date of publication of application: **21.01.2026**
(21) Application number: 25189943.1
(22) Date of filing: 16.07.2025
(51) Int. Cl.: H02K 9/19, H02K 1/20, H02K 1/32, H02K 5/20

(54) **ELECTRIC MOTOR FOR A MOTOR VEHICLE**

(30) Priority: 19.07.2024 IT 202400016792
(71) Applicant: FERRARI S.p.A., 41100 Modena (IT)
(72) Inventor: PASQUALE, Stefano, 41100 MODENA (IT); QUONDAM ANTONIO, Simone, 41100 MODENA (IT); TRANSI, Tommaso, 41100 MODENA (IT); CRIVELLARO, Denis, 41100 MODENA (IT); FERRARA, Davide, 41100 MODENA (IT); GAMBA, Matteo, 41100 MODENA (IT); DELLA FORNACE, Enrico, 41100 MODENA (IT)
(74) Representative: Studio Torta S.p.A.

(57) **Abstract**

An electric motor (2) for a motor vehicle (1), comprising a stator (4), which is fixed relative to an axis (A); a rotor (3), which can rotate around said axis (A) relative to said stator (4) and is provided with a plurality of permanent magnets; and a first cooling circuit (50), through which a first heat transfer fluid can flow and which is thermally coupled to the stator and the rotor (3, 4) to remove heat from them; the first cooling circuit (50) comprises, in turn, a first branch (51) housed inside the rotor (4) and shaped like a helix.

## Description

### CROSS-REFERENCE TO RELATED APPLICATIONS

This patent application claims priority from Italian patent application no. 102024000016792 filed on July 19, 2024, the entire disclosure of which is incorporated herein by reference.

### TECHNICAL FIELD

The invention relates to an electric motor for a motor vehicle.

### BACKGROUND

Electric or hybrid vehicles are known, which comprise an electric motor with permanent magnets.

Briefly stated, the permanent magnet electric motor comprises, in turn:
- a stator provided with electrically powered electric windings to form a rotary magnetic field; and
- a rotor mounted in a rotary manner relative to the stator around an axis of its, provided with permanent magnets and subjected to a torque around the axis following the supply of alternating current to the electric windings.

In the industry, there is a need to cool the electric motor, reducing its overall weights and dimensions.

Furthermore, the industry feels the need to increase the torque and power density - namely, the ratio between torque/power and weight - of the electric motor.

### SUMMARY

The object of the invention is to provide an electric motor for a motor vehicle, which is capable of fulfilling at least one of the needs discussed above.

The aforesaid object is reached by the invention, as it relates to an electric motor as defined in claim 1.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a cross section of an electric motor according to the invention;

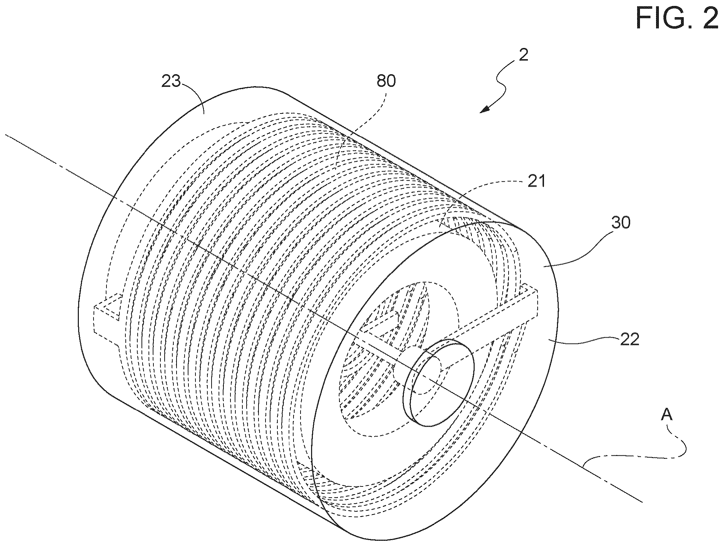

- figure 2 is s a perspective view of first components of the electric motor of figure 1;

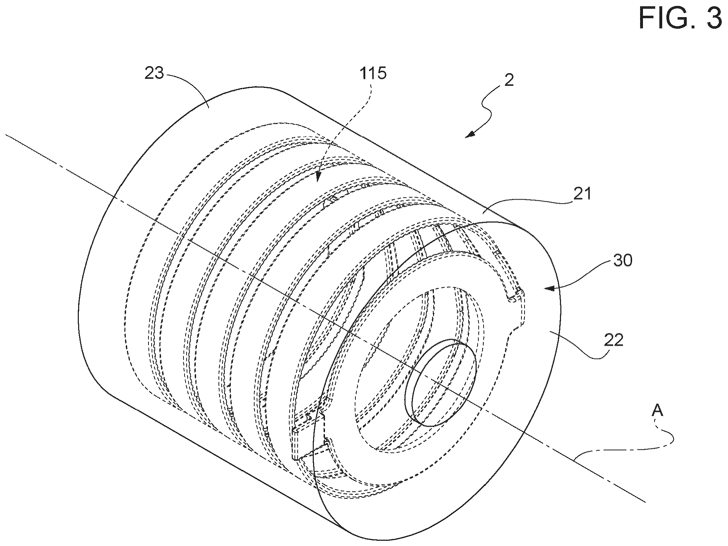

- figure 3 is s a perspective view of second components of the electric motor of figure 1; and
- figure 4 shows, in a perspective view with a section along a longitudinal plane, a rotor of the electric motor of figures 1 to 3.

### DESCRIPTION OF EMBODIMENTS

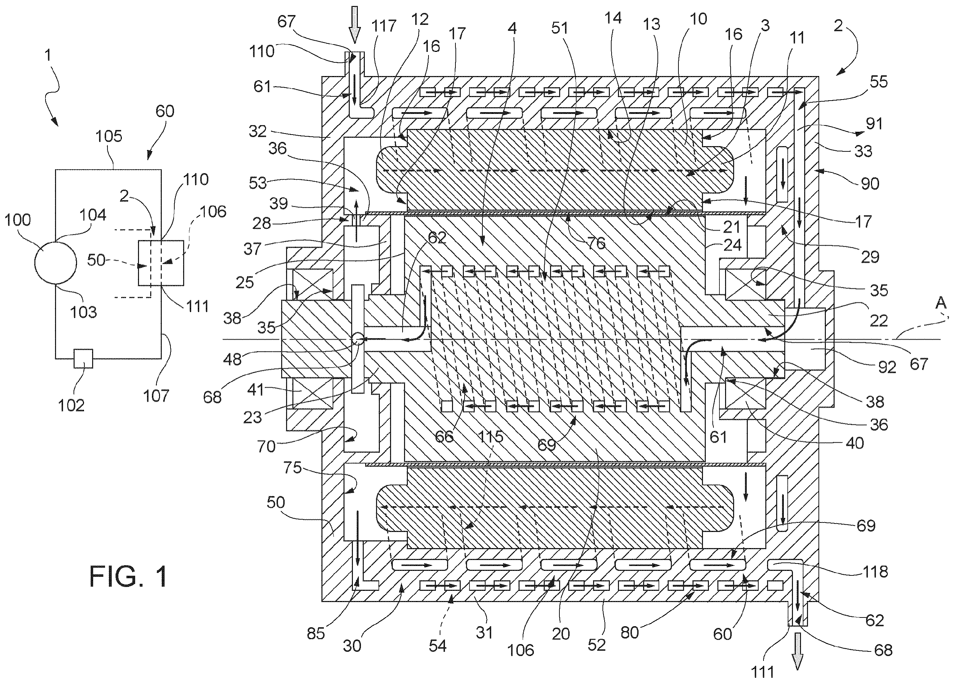

With reference to Figure 1, number 1 indicates an electric or hybrid motor vehicle 1.

The motor vehicle 1 is shown limited to an electric motor 2, an electric motor with permanent magnets in the specific case shown herein.

The electric motor 2 basically comprises:
- a stator 3, which is fixed relative to an axis A; and
- a rotor 4, which can rotate around the axis A relative to the stator 3.

In a known manner, the stator 3 is provided with electric windings (not shown in Figure 1) electrically powered with an electric current to form a rotary magnetic field.

The rotor 4 is provided with permanent magnets (also not shown in Figure 1) and subjected to a torque around the axis A following the supply of alternating current to the electric windings.

In the specific case shown herein, the stator 3 is tubular with axis A and the rotor 4 is coaxially housed inside the stator 3.

The stator 3 comprises, in turn:
- a main body 10; and
- a pair of appendages 11, 12 arranged at respective axial ends of the main body 10.

The appendages 11, 12 axially project from the main body 10.

The main body 10 is delimited by a radially outer surface 13 and a radially inner surface 14.

The appendages 11, 12 are radially interposed between the surfaces 13, 14 and connected to the surfaces 13, 14 by means of respective abutments 16, 17.

The rotor 4 comprises, in turn:
- a main body 20 housed inside the stator 3 and delimited by a surface 21; and
- a pair of appendages 22, 23 arranged at respective opposite axial ends of the main body 20 and radially protruding from the main body 20 itself.

The appendages 22, 23 are joined to the surface 21 by means of respective abutments 24, 25.

The electric motor 2 further comprises:
- a casing 30 with axis A, which is fixed relative to the axis A and coaxially houses the stator 3 and the rotor 4; and
- a pair of rolling bearings 40, 41 radially interposed between the rotor 4 and the casing 30 and designed to allow the rotor 4 to rotate around the axis A relative to the casing 30.

The casing 30 is shaped like a hollow cylinder and basically comprises:
- a tubular wall 31 with a predominantly axial development; and
- a pair of flanges 32, 33 arranged at respective axial ends of the main wall 31.

Each flange 32, 33 comprises:
- a respective hole 38 with axis A, which is crossed with a radial clearance by a respective appendage 22, 23 of the rotor 4; and
- a respective abutment 35 delimiting the corresponding hole 38 in a radially inner position relative to the axis A.

Each bearing 40 is radially interposed between a respective appendage 22, 23 and the abutment 35 defined by a corresponding flange 32, 33.

Advantageously, the electric motor 2 comprises a cooling circuit 50, through which a first heat transfer fluid, in particular dielectric oil, can flow and which is thermally coupled to the stator 3 and the rotor 4 to remove heat from them; the cooling circuit 50 comprises, in turn, a branch 51 housed inside said rotor 4 and shaped like a helix.

The motor vehicle 1 further comprises a cooling circuit 60, through which a second heat transfer fluid, in particular water with glycol, can flow and which is thermally coupled to the cooling circuit 50 to remove heat from it.

Briefly stated, the cooling circuit 50 removes heat from the stator 3 and the rotor 4 and the cooling circuit 60 removes heat from the cooling circuit 50.

More in detail, the cooling circuit 50 is integrated in the electric motor 2.

The cooling circuit 50 further comprises:
- a branch 52 going through said stator 3; and
- a branch 53, which fluidly connects the branches 51, 52;
- a branch 54 going through the casing 30; and
- a branch 55, which fluidly connects the branch 54 and the branch 51.

More in detail, the first fluid sequentially flows along the branch 51, the branch 53, the branch 52, the branch 54, the branch 55 and then returns to the branch 51.

As better explained below, the first fluid is caused to flow by the thrust provided by the rotor 4 to the first fluid present in the branch 51.

Preferably, the cooling circuit 50 does not comprise drive pumps to cause the first fluid to flow.

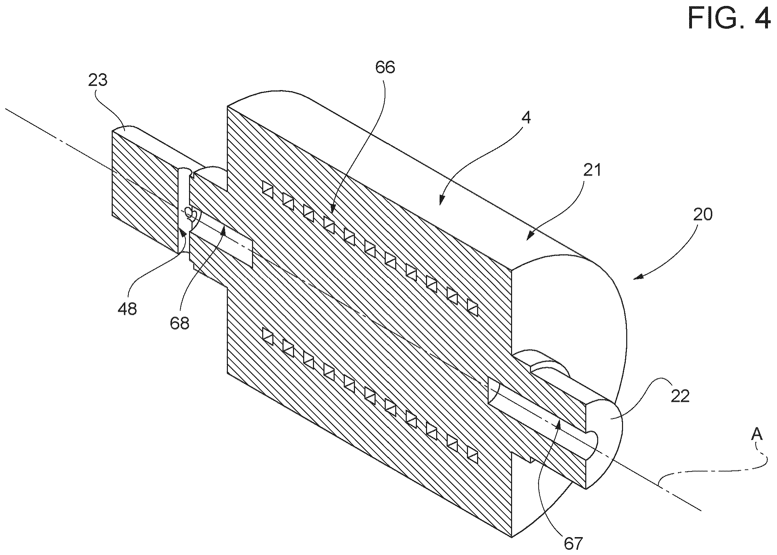

With particular reference to Figure 4, the rotor 4 comprises:
- a helical groove 66 with axis A, preferably with a constant pitch and defined by the main body 20; and
- a pair of ducts 67, 68 also with axis A, which are arranged at respective opposite axial ends of the groove 66 and are defined by respective appendages 23, 22.

The branch 51 comprises:
- a segment 69 defined by the groove 66; and
- a pair of axial segments 61, 62 defined by respective ducts 67, 68.

The segments 61, 62 are in fluid connection with the branches 52, 54 of the cooling circuit 50, respectively.

The segments 61, 62 are arranged at respective opposite axial ends of the segment 69.

The segment 69 and the groove 66 are shaped so that the centrifugal force acting upon the first fluid following the rotation of the rotor 4 in a first direction determines an axial thrust acting upon the first fluid and having a second direction oriented from the segment 62 to the segment 61.

The electric motor 2 further comprises:
- a radial hole 68 passing through the appendage 23 and in fluid communication with the duct 67;
- an annular chamber 70 in fluid communication with the hole 68;
- an annular chamber 75 housing said stator 3 and in fluid communication with the chamber 70;
- a helical groove 80 in fluid communication with the chamber 75;
- a radial duct 85 passing through and in fluid communication with the groove 80 and the chamber 75; and
- a duct 90 extending radially to the axis A and extending from an axial end of the groove 80 opposite the hole 85 up to the duct 68.

In particular, the casing 30 comprises an appendage 28 projecting from the flange 32 towards the rotor 4 and an appendage 29 projecting from the flange 33 towards the appendage 28.

The appendages 28, 29 are axially opposite one another.

The appendage 28 comprises, in particular:
- a wall 36 with an axial development, which extends from the flange 32 and is radially interposed between the wall 31 and the appendage 22; and
- a wall 37 with a radial development, which is axially interposed between the flange 32 and the main body 20 and radially extends between an axial end of the wall 36 axially opposite the flange 32 and the appendage 22.

The appendage 29 is tubular, surrounds the abutment 35 at a radial distance and is arranged at the same radial distance from the axis A as the wall 36.

In particular, the wall 37 is separated from the appendage 22 by a radial clearance.

The casing 30 further comprises an annular element 76 fixed to the wall 36 and to the appendage 28 and interrupted in the area of a plurality of radial holes 39 (only one of them being shown in Figure 1) made in the wall 36.

The chamber 70 is axially defined between the flange 32 and the wall 37 and is radially defined between the wall 36 and the appendage 22.

The chamber 75 is axially delimited between the flanges 32, 33 and is radially delimited between the casing 30 and the element 76 and the appendage 28.

The chamber 75 is in fluid communication with the chamber 70 through a plurality of holes 39 (only one of them being shown in Figure 1).

The hole 85 and the groove 80 are obtained within the wall 31 of the casing 30.

The duct 90 is obtained in the flange 33 and comprises, in turn, moving from the groove 80 towards the duct 68:
- a segment 91; and
- a chamber 92 having a larger radial size than the segment 91.

The branches 53; 52 of the cooling circuit 50 are defined by the hole 68 and the chamber 70; and by the chamber 75, respectively.

The branches 54, 55 of the cooling circuit 50 are defined by the groove 80 and by the duct 90, respectively.

The cooling circuit 60 is partly housed inside the motor vehicle 1.

The cooling circuit 60 comprises, in turn, as merely schematically shown in Figure 1:
- a pump 100; and
- a radiator 102.

The pump 100 comprises a suction mouth 103 and a delivery mouth 104 and can be operated to generate the head needed to feed the second fluid along the cooling circuit 60.

The cooling circuit 60 comprises, in turn, moving from the delivery mouth 104 to the suction mouth 103 according to the flowing direction of the second fluid:
- a branch 105, which is external to the electric motor 2 and along which the second fluid flows at a first temperature;
- a branch 106, which is obtained inside the electric motor 2 and along which the second fluid removes heat from the first fluid, until it reaches a second temperature value higher than the first temperature value; and
- a branch 107, which is external to the electric motor 2.

The radiator 102 is interposed along the branch 107 and brings the temperature of the second fluid back from the second value to the first value by means of an exchange of heat with a cold source.

The pump 100 and the radiator 102 are carried by the motor vehicle 1 on the outside of the electric motor 2.

The wall 31 of the casing 30 further comprises:
- an inlet mouth 110, which is fluidly connected to the branch 105 of the cooling circuit 60;
- an outlet mouth 111 fluidly connected to the branch 107 of the cooling circuit 60; and
- a helical groove 115 with axis A.

The wall 31 further comprises:
- the inlet duct 67 with a radial development, which extends between the inlet mouth 110 and an inlet 117 of the groove 115; and
- the outlet duct 68 with a radial development, which extends between an outlet 118 of the groove 115 and the outlet mouth 111.

The groove 115 is coaxially housed inside the groove 80.

The branch 106 is defined by the duct 116, by the groove 115 and by the duct 120.

The branches 106, 54 of the respective cooling circuits 60, 50 radially face one another inside the casing 30.

The branches 106, 54 are thermally coupled so that the first fluid flowing inside the branch 54 releases heat to the second fluid flowing inside the branch 106.

In use, the activation of the electric motor 2 determines the generation of heat in the area of the rotor 4 and the stator 3.

Due to the presence of the permanent magnets, the generation of heat is greater in the area of the rotor 4.

The first fluid flows inside the cooling circuit 50, removing heat from the rotor 4 and the stator 3 and overheating.

The second fluid flows inside the cooling circuit 60, removing heat from the first cooling fluid and thus allowing said first fluid to continue to remove heat from the rotor 4 and the stator 3.

In greater detail, the pump 100 causes the second fluid to flow inside the cooling circuit 60 according to a direction oriented from the suction mouth 103 to the delivery mouth 104.

The second fluid flows along the branch 105, which is external to the electric motor 2, at the third temperature value, reaches the inlet mouth 110, flows along the branch 106, which is internal to the electric motor 2, and subtracts heat from the first fluid until it reaches the fourth temperature value, which is higher than the third temperature value, flows out the electric motor 2 through the outlet mouth 111 and returns to the pump 100 through the branch 107, which is external to the electric motor 2. The second fluid flows through the radiator 102 and cools down until it reaches again the third temperature value.

At the same time, the rotation of the rotor 4 around the axis A determines, thanks to the fact that the segment of the branch 51 is defined by the helical groove 66, an axial thrust exerted upon the first fluid, which allows the latter to flow inside the cooling circuit 50 in the direction oriented from the duct 67 to the duct 68, without the need to use further driving members.

More in particular, the helical shape of the groove 66 allows the centrifugal force due to the rotation of the rotor 4 around the axis A to be used to create an axial force parallel to the axis A, which pushes the second fluid inside the cooling circuit 50.

The first fluid cools the rotor 4 by flowing inside the duct 67, the groove 66 and the duct 68, which define respective segments 61, 69, 62 of the branch 51.

Subsequently, the first fluid flows through the hole 68 defining the branch 53 and reaches the chamber 75 defining the branch 52 and housing the stator 3.

The first fluid flows through the stator 3 and cools the stator 3 itself.

The first fluid then flows through the hole 85 and the helical groove 80 defining the branch 54 of the cooling circuit 50 and through the duct 90 defining the branch 55 of the cooling circuit 50 until it returns to the duct 67 of the branch 51.

More in detail, the first fluid flowing along the groove 80 releases heat to the second fluid flowing along the groove 115.

More precisely, the first fluid is at a first temperature value when it flows along the hole 85 and is at a second temperature value, which is lower than the first temperature value, when it flows along the duct 90.

An examination of electric motor 2 according to the invention clearly shows the advantages it makes possible to achieve
In particular, the cooling circuit 50 removes heat from the stator 3 and the rotor 4 and comprises, in turn, a branch 51 housed inside the rotor 4 and shaped like a helix.

In this way, the centrifugal force acting upon the first fluid following the rotation of the rotor 4 is used, thanks to the helical shape of the branch 51, to generate an axial thrust acting upon the first fluid and directed in the direction oriented from the duct 67 to the duct 68.

This axial thrust ensures the circulation of the first fluid inside the cooling circuit 50 and makes it possible to overcome inevitable pressure drops present along the cooling circuit 50.

It is thus possible to avoid the use of pumps dedicated to the circulation of the first fluid inside the cooling circuit 50, with consequent advantages in terms of increase in the torque and power density and reduction in the weights and dimensions of the electric motor 2.

The first fluid flowing along the cooling circuit 60 is caused to go back, along the branch 54, from the third temperature value to the fourth temperature value, which is lower than the third temperature value, and can thus effectively cool again the rotor 4 and the stator 3 along the respective branches 51, 52, without requiring the use of additional heat exchangers.

This further increases the torque and power density of the electric motor and further reduces its weight and overall dimensions.

The branch 51 of the cooling circuit 50 along which the first fluid cools the rotor 4 is interposed between the branch 54 along which the first fluid is cooled by the second fluid and the branch 52 along which the first fluid cools the stator 3.

In this way, the first fluid is at a lower temperature when it removes heat from the rotor 4 than when it removes heat from the stator 3. This makes it possible to remove more heat from the rotor 4, which is at a higher temperature due to the presence of the permanent magnets.

The cooling circuit 50 is also completely housed inside the electric motor 2, thus forming - together with the latter - one single assembly that can be removed from and installed in the vehicle 1 without having to act upon components other than the inlet mouth 110 and the outlet mouth 111.

Thanks to the fact that the first fluid is a dielectric oil, there is no risk of short circuits with the electric components of the rotor 4.

Finally, the electric motor 2 according to the invention can be subjected to changes and variations, which, though, do not go beyond the scope of protection set forth in the appended claims.

## Claims

1. An electric motor (2) for a motor vehicle (1), comprising:
- a stator (4), which is fixed relative to a first axis (A);
- a rotor (3), which can rotate around said axis (A) relative to said stator (4) and is provided with a plurality of permanent magnets; and
**characterized in that** it comprises a first cooling circuit (50), through which a first heat transfer fluid can flow and which is thermally coupled, in use, to said stator and rotor (3, 4) to remove heat from them;
said first cooling circuit (50) comprising, in turn, a first branch (51) housed inside said rotor (4) and shaped like a helix.

2. The electric motor according to claim 1, **characterised in that** said first cooling circuit (50) comprises a second branch (52) going through said stator (3) and thermally coupled to said stator (3) to remove heat from it;
said second branch (52) being consecutive to said first branch (51), with reference to a normal flowing direction of said first fluid inside said first cooling circuit (50).

3. The electric motor according to claim 2, **characterized in that** it comprises a casing (30) housing said rotor (4) and stator (3);
said first cooling circuit (50) comprising a third branch (54) going through said casing (30);
said third branch (54) being consecutive to said second branch (52), with reference to a normal flowing direction of said first fluid inside said first cooling circuit (50).

4. The electric motor according to any one of the preceding claims, **characterized in that** it houses a fourth branch (106) of a second cooling circuit (60), through which a second heat transfer fluid can flow and which is thermally coupled, in use, to said first cooling circuit (50) to remove heat from it.

5. The electric motor according to claim 4, **characterized in that** said fourth branch (106) extends inside said casing (30) and is thermally coupled to said third branch (54) of the first cooling circuit (50).

6. The electric motor according to claim 5, **characterized in that** said fourth branch (106) coaxially surrounds said third branch (54).

7. The electric motor according to claim 5 or 6, **characterized in that** said third and fourth branches (106, 54) are shaped like respective coaxial helices.

8. The electric motor according to any one of the preceding claims, **characterized in that** said second branch (52) has a main extension parallel to said first axis (A).

9. The electric motor according to any one of the claims from 4 to 8, **characterized in that** said casing (30) comprises:
- a tubular body (31) coaxially surrounding said stator and rotor (3, 4) and defining an inlet and an outlet (110, 111) for said second fluid; and
- a first and a second flange (32, 33) arranged at respective axial ends of said tubular body (31);
said third and fourth branches (106, 54) extending inside said tubular body (30);
said second flange (33) housing a fifth branch (55) of said first cooling circuit (50); said fifth branch (55) being fluidly connected between said third branch (54) and first branch (51).

10. The electric motor according to any one of the claims from 4 to 9, **characterized in that**:
- said rotor (4) comprises at least one hole (68), which is radial relative to said axis (A), and a helical groove (66), which defines at least part of said first branch (51) and is in fluid communication with said first hole (68);
- said casing (30) and said rotor (4) define a first annular chamber (70) in fluid communication with a hole (68); and
- said housing (30) defines a second annular chamber (75), housing said stator (3) and in fluid communication with said first chamber (70);
said second chamber (75) at least partly defining said second branch (52), and said third chamber (70) and said hole (68) at least partly defining a fifth branch (55) of said first cooling circuit (50) fluidly interposed between said first branch (51) and third branch (5).

11. The electric motor according to any one of the preceding claims, **characterized in that** said first fluid is different from said second fluid, in particular said first fluid is oil and said second fluid is a mixture at least partly comprising water;
and/or **characterized in that** said first fluid is dielectric.

12. A motor vehicle comprising:
- an electric motor (2) according to any one of the claims from 4 to 11;
said second cooling circuit (60) further comprising a heat exchanger (102) external to said electric motor (2) and fluidly connected to said fourth branch (106);
said heat exchanger (102) comprising, in turn, a second inlet designed to receive said second fluid at a first temperature and a second outlet designed to deliver said second fluid at a second temperature lower than said first temperature.
